# EUROPEAN PATENT SPECIFICATION

(11) **EP 1 358 054 B1**
(45) Date of publication and mention of the grant of the patent: **27.07.2005**
(21) Application number: 02718051.2
(22) Date of filing: 26.01.2002
(51) Int. Cl.: B29C 31/00

(54) **METHOD AND APPARATUS FOR MANUFACTURING CONTAINERS WITH OUT-OF-CENTRE MOUTH**
VERFAHREN UND VORRICHTUNG ZUM HERSTELLEN VON BEHÄLTERN MIT DEZENTRALER BEHÄLTERMÜNDUNG
DISPOSITIF ET PROCEDE DE FABRICATION DE RECIPIENTS AVEC UNE OUVERTURE EXCENTREE

(30) Priority: 07.02.2001 IT PN20010009
(43) Date of publication of application: 05.11.2003
(73) Proprietor: SIPA S.p.A., I-31029 Vittorio Veneto (IT)
(72) Inventor: FIBBIA, Mauro, I-31030 Casier (IT); ARMELLIN, Alberto, I-31029 Vittorio Veneto (IT)
(74) Representative: Giugni, Valter
(86) International application number: PCT/EP2002/000834
(87) International publication number: WO 2002/062549

(56) References cited:
- EP-A- 0 739 823
- DE-C- 4 402 295
- GB-A- 1 296 963
- JP-A- 4 069 226
- JP-A- 5 024 099
- JP-A- 2000 102 970
- JP-A- 2001 088 202
- US-A- 5 256 341
- US-A- 5 292 243
- US-A- 5 681 521
- US-A- 5 853 775
- US-A- 6 019 933
- US-A- 6 113 840
- PATENT ABSTRACTS OF JAPAN vol. 018, no. 616 (M-1710), 24 November 1994 (1994-11-24) & JP 06 238742 A (MITSUBISHI PLASTICS IND LTD), 30 August 1994 (1994-08-30)
- PATENT ABSTRACTS OF JAPAN vol. 016, no. 395 (M-1299), 21 August 1992 (1992-08-21) & JP 04 131222 A (TOYO SEIKAN KAISHA LTD), 1 May 1992 (1992-05-01)
- PATENT ABSTRACTS OF JAPAN vol. 1998, no. 08, 30 June 1998 (1998-06-30) & JP 10 071641 A (YOSHINO KOGYOSHO CO LTD), 17 March 1998 (1998-03-17)
- PATENT ABSTRACTS OF JAPAN vol. 016, no. 235 (M-1257), 29 May 1992 (1992-05-29) & JP 04 049023 A (TOPPAN PRINTING CO LTD), 18 February 1992 (1992-02-18)
- PATENT ABSTRACTS OF JAPAN vol. 018, no. 037 (M-1545), 20 January 1994 (1994-01-20) & JP 05 269828 A (TOPPAN PRINTING CO LTD), 19 October 1993 (1993-10-19)
- PATENT ABSTRACTS OF JAPAN vol. 1995, no. 01, 28 February 1995 (1995-02-28) & JP 06 278196 A (NISSEI ASB MACH CO LTD), 4 October 1994 (1994-10-04)
- PATENT ABSTRACTS OF JAPAN vol. 1999, no. 13, 30 November 1999 (1999-11-30) & JP 11 207806 A (KAO CORP), 3 August 1999 (1999-08-03)
- PATENT ABSTRACTS OF JAPAN vol. 1995, no. 01, 28 February 1995 (1995-02-28) & JP 06 285965 A (NISSEI ASB MACH CO LTD), 11 October 1994 (1994-10-11)
- PATENT ABSTRACTS OF JAPAN vol. 018, no. 186 (M-1585), 30 March 1994 (1994-03-30) & JP 05 345350 A (DENKI KAGAKU KOGYO KK), 27 December 1993 (1993-12-27)

## Description

The present invention refers to a particular method for manufacturing containers of thermoplastic resin, in particular PET, that are provided with a cylindrical neck portion, on which a normal cap is then screwed, but have a body that is formed to a shape which is asymmetrical with respect to all planes passing through the axis of said neck portion of the container, with the exclusion of a single plane thereof, which therefore forms the one and single plane of symmetry of the container.

Containers of this kind are usually manufactured by initially obtaining a preform through the extrusion in an appropriate manner of a molten mass of pelletized plastic material, and then submitting such a preform to blow-moulding so as to cause it to take the desired shape of the finished container. These containers shall be called "asymmetrical" in this context for the sole reason that this is how they are usually referred to in the common practice; they are universally used in particular applications and fields of utilization that require a considerable reduction in a total available volume with respect to the sum of the volumes of a determined number of containers included in said total volume. It is a largely well-known fact that the containers featuring a good "volumetric efficiency" are those containers whose shape comes as close as possible to a parallelepiped.

In addition, such containers shall possess a good prehensility, ie. shall be particularly adapted to convenient grasping or seizing, since they are most likely to be handled by hands that may not be very well fit, ie. in a suitable condition for seizing them. As a matter of fact, typical fields of utilization of these containers are when they contain, ie. are filled with lubricant oil or detergent.

Containers of this kind are manufactured starting from fully traditional and therefore, cylindrical preforms, although it would be possible, albeit very complicated, demanding and expensive, for these containers to be manufactured starting from preforms that are actually so shaped as to as much as possible anticipate the ultimate shape of the blow-moulded container.

However, the step in which the preforms are blow-moulded in view of obtaining said asymmetrical containers, has the following substantial drawback connected with the downward stretching of the preform.

As a matter of fact, the actual blow-moulding step comprises following two sub-steps: a first sub-step in which an appropriate stretching rod is inserted deeply down into the preform so as to push the bottom of the preform against the matching portion, ie. the bottom of the blowing mould and, as a result, to so determine the correct height dimension of the finished container; and a second, subsequent sub-step, in which compressed air is let into the preform.

At the beginning of the above mentioned second sub-step, the bottom of the preform is blown partially. However, since the asymmetry of both the thermal configuration or pattern of the preform and the geometrical configuration of the mould is rather considerable, the fact occurs that the bottom of the preform, although it is in contact with the end portion of the stretching rod , bends to one side, thereby taking an irregular, almost curl-like shape, and in particular it bends towards the asymmetrical portion of the mould.

As a result, the end portion of the stretching rod fails to touch the bottom of the preform, but comes instead into contact with a more or less lateral zone; therefore, such a circumstance causes the blow-moulding effect to become still more irregular and uncertain, while the resulting container quite frequently exhibits distortions, deformations or even cracks that make it completely useless.

In view of being able to guide the bottom of the preform correctly, or even to the mere purpose of correctly forming the bottom of the preform during blow-moulding, even in the case of non-asymmetrical containers, a number of solutions have been found and disclosed in the art: one of these solutions, exemplified in the Japanese patent application no. 53-2296, provides for a rod (21) protruding from the bottom of the mould, is capable of penetrating into the container being moulded so as to determine in a very accurate manner the crystallization process and the thickness of the bottom of the same container.

However, such an operation is only carried out when the blowing step, and therefore the step involving the formation of the container, has already been completed, so that no teaching emerges therefrom as far as the maintenance of the correct position of the bottom of the container during blowing is concerned.

The French patent no. 2508004, granted to AOKI, discloses a solution that makes use of a contrasting and reference rod 12 that acts as an abutment on the outside of the bottom of the container during blow-moulding; in this solution, however, the purpose of said rod is completely different from the one involving the positioning of the bottom of the container, since it can be clearly inferred that such a bottom is fully stretched and, therefore, guided by the stretching rod prior to the beginning of the step in which the compressed air is let in, so that no teaching is actually given in view of maintaining the correct position of the bottom during the initial part of the blowing process, but prior to the beginning of the penetration movement of the stretching rod, since in this case blowing only starts after said stretching rod has fully moved into the preform.

A solution is known from US 3,949,033, which is based on the use of a convex counter-rod (47) that penetrates to a certain extent from the outside of the bottom of the container after blowing; such a solution, however, has the sole purpose of generating a markedly arcuate curvature of the bottom of the container, while it does not involve any teaching as to how correctly holding the bottom of the preform during the blowing step.

From JP 2000102970 a bottle blow moulding apparatus is known, provided with an ejector pin (3) which releases the bottle at its bottom part.

An air ejector hole for product removal is provided at the centre of the ejector pin.

As it is possible to inject air through the ejector pin, mould release is improved.

However, said pin is not able to engage against a portion of the outer surface of the bottom of the opposite preform during the movement of the stretching rod into said preform, that would endanger the blowing results, mainly when asymmetrical bottles are blown.

From JP 6238742 a method to control the wall thickness distribution of a hollow moulded product is known; said method is based on the fact that the wall thickness distribution is depending also on the temperature distribution of the inner wall of a temperature control pot containing the hollow moulded product.

Said method is useful for providing special and not-symmetrical items, as for example a handled bottle.

However said method does not consider the problem of correctly and timely removing the hollow moulded product (parison), once it has been fully moulded and has to be taken away from the respective mould.

Based on the above considerations, it is therefore a main purpose of the present invention, to provide a method and an apparatus adapted to provide a blowing step for an asymmetrical container, in which the position of the bottom of the preform, and therefore of the container, is accurately determined and held in an absolutely firm manner throughout the duration of the blowing step.

Such an aim of the present invention, along with further features thereof that will be described in the following description, is reached in a method and an apparatus that are made and operate as recited in the appended claims.

The present invention may take the form of a preferred, although not sole embodiment such as the one that is described in detail and illustrated below by way of non-limiting example with reference to the accompanying drawings, in which:
- Figures 1 to 4 and Figure 6 are schematical views of respective steps of a blow-moulding method and the related apparatus according to present invention;
- Figure 5 is a front, elevational view of an isolated component member of the apparatus illustrated in the preceding Figures.

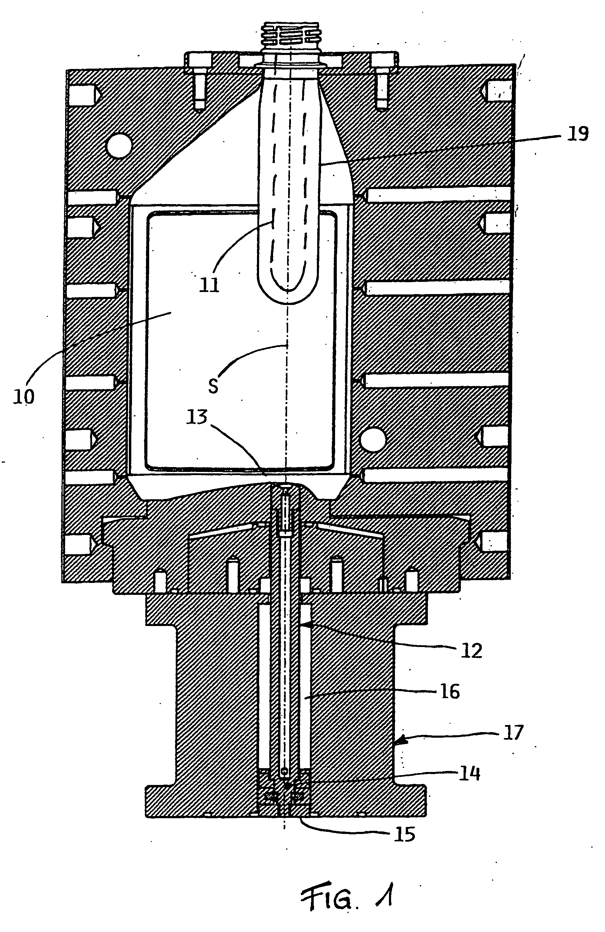

With reference to Figures 1 to 4, the present invention covers the provision of asymmetrical blow-moulding cavities that are provided with a particular apparatus adapted to carry out the process described below, In other words, the blowing mould, further to the asymmetrical cavity 10 and the stretching rod 11, is also provided with a counter-rod 12, which is arranged in alignment with said stretching rod 11 on the opposite side thereof with respect to the blow-moulding cavity.

This counter-rod 12 is delimited at its end portions by a terminal zone 13, which is oriented towards the interior of the blow-moulding cavity and, therefore, towards the stretching rod, and by the opposite terminal zone 14. The counter-rod 12 is further provided slidably within an appropriate housing in such a manner as to ensure that the sliding axis "S" of the stretching rod is the same as the one of this counter-rod.

In addition, the movement and the position of this counter-rod are controllable and actuatable pneumatically; to this purpose, in fact, the outer terminal zone 14 thereof is provided with a piston 15 that is adapted to be guided within a channel 16 provided in a body 17 that is firmly joined to or integral with said blow-moulding cavity. Such a piston 15 is actuatable pneumatically by means of a forced flow of gas that is let into and blown off said channel 16 in a controlled manner.

Said counter-rod 12 is therefore adapted to be pushed into said blow-moulding cavity 10 until the terminal zone 13 thereof is brought to almost come into contact with, ie. touch the bottom 18 of the preform and, by interrupting the pressure exerted by the gas let into the channel 16, it can be ejected out of said blow-moulding cavity owing to the pushing action exerted by the bottom of the preform being in turn pushed in the same direction by the stretching rod.

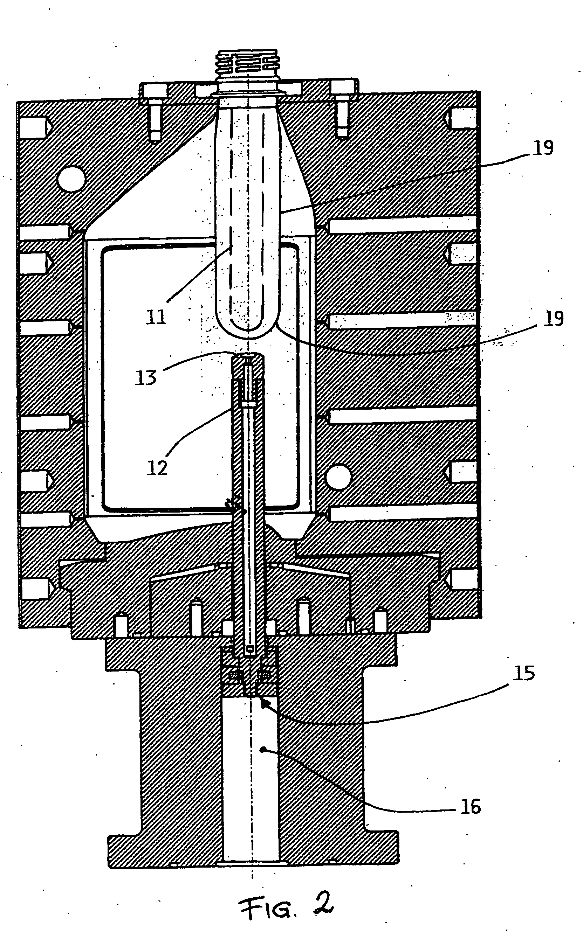

The way in which the present invention actually works should at this point be fully apparent: in a first sub-step (Figure 1), the preform 19 is inserted in the blow-moulding cavity, while the counter-rod 12 had been previously withdrawn to the outside of the same cavity; in a subsequent sub-step (Figure 2), said counter-rod 12 is pushed forward pneumatically until the terminal zone 13 thereof reaches a position at a minimum distance from, but not in contact with the outer wall of the bottom of the preform.

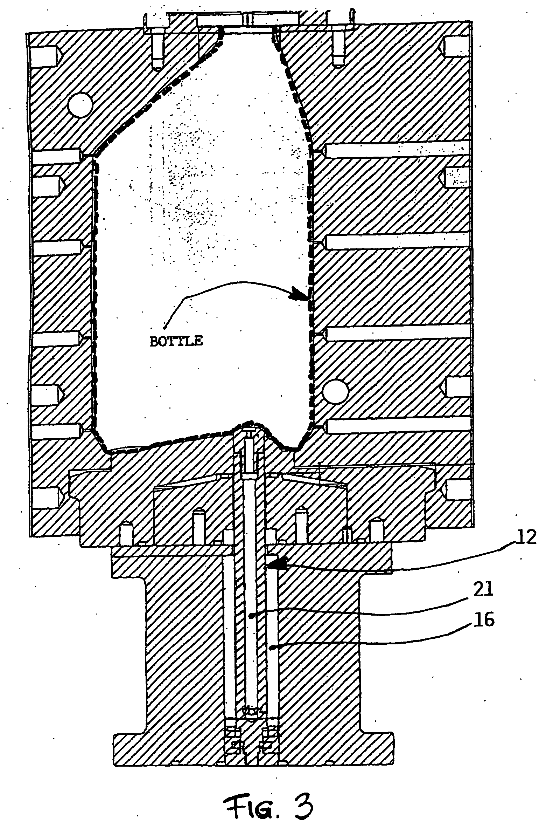

In the subsequent sub-step (Figure 3), the preform is blow-moulded under admittance of gas under pressure into said preform, while the stretching rod is at the same time caused to fully move into the preform itself. During this sub-step, the bottom of the preform 19 enters into contact with the terminal zone 13 of the counter-rod, which is therefore pushed outwards with a movement that is fully synchronous with the movement of the stretching rod on the other side.

Therefore, since the bottom wall of the preform is in this way clamped, with an obviously controllable pressure, between the opposite terminal portions of the stretching rod and the counter-rod, said bottom wall is guided in a constrained manner and with a rectilinear motion towards the correct final position on the bottom of the blow-moulding cavity, with the desired result of preventing said bottom wall of the preform from suffering any possible warping or uncontrolled distortion.

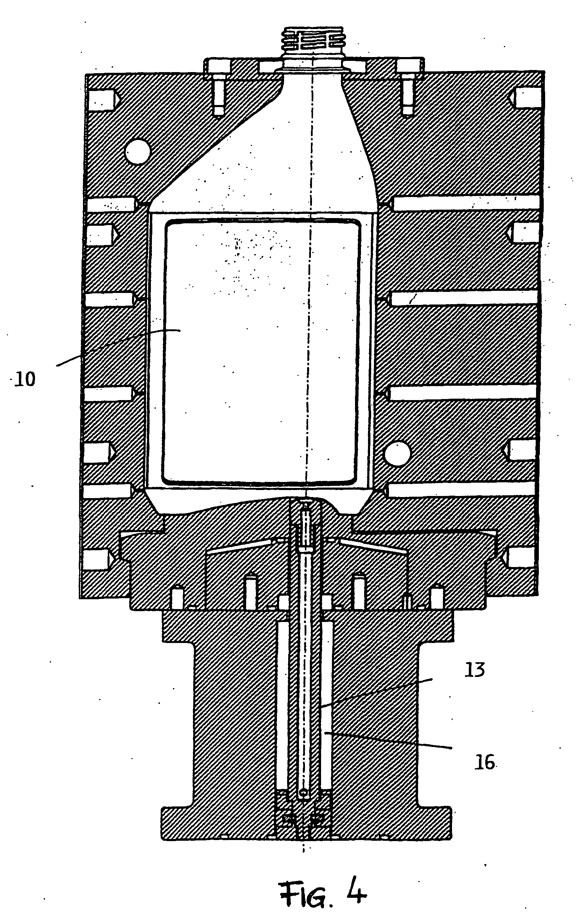

Upon conclusion of this blow-moulding sub-step, the counter-rod 12 is retained in the final position reached by it through an appropriate decompression in said channel 16, or with the aid of other means known in the art, and the blowing mould is opened, so that the blow-moulded hollow body can eventually be removed therefrom according to any of the conventional methods used to this purpose (Figure 4).

The above illustrated process is then repeated starting from the sub-step that has been described at the beginning. It may also be considered as being still more advantageous, in view of avoiding the risk of the bottom of the preform possibly undergoing some warping or distortion even prior to the beginning of the actual blow-moulding sub-step, if the counter-rod 12 is inserted in the mould cavity, and is allowed to stop in a position quite close to the bottom of the preform, prior to the stretching rod 11 being itself inserted in the preform. Anyway, such a reversal in the initial motions of the stretching rod and the counter-rod would by no way alter the sequence and the way in which the subsequent sub-steps are carried out.

It has however been found that the fact that the counter-rod is pressed against the bottom of the preform 19 may give rise to a drawback in that the preform itself may get stuck to said terminal zone 13 of the counter-rod and this would of course give rise to difficulties in the ejection of the hollow body from the mould after blow-moulding.

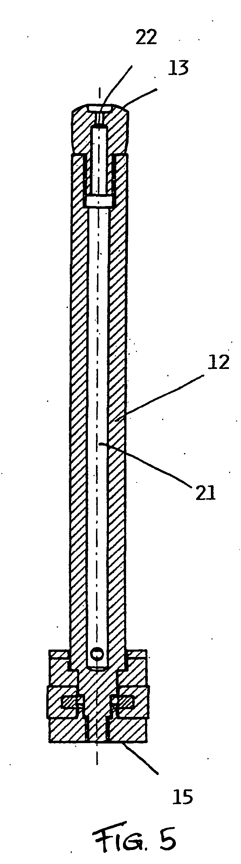

In order to do away with such a drawback, an advantageous improvement of the present invention consists in providing said counter-rod 12 with an inner longitudinal cavity 21 communicating with the outside of said terminal zone 13, ie. the one which enters into contact with the preform, through a plurality of through-perforations 22 (Figure 5).

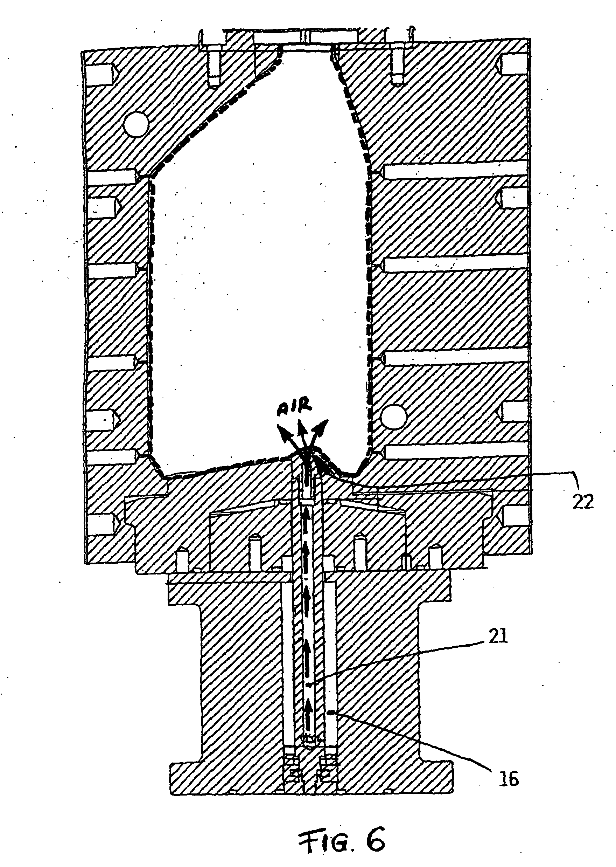

Such a cavity 21 is connected to a gas source, the delivery of which is capable of being controlled both in the timing and the pressure of the gas supply. The operation of the thus resulting counter-rod 12 therefore consists; further to its already described sliding motion into the blow-moulding cavity, in issuing gas jets from said through-perforations 22 upon completion of the blow-moulding sub-step and prior to the opening of the blowing mould, in such a manner as to enable these gas jets to promote the separation of said terminal zone 13 of the counter-rod from the bottom of the blow-moulded hollow body, so as to free the latter from any constraint that might affect or slow down a correct removal thereof from the mould (Figure 6).

## Claims

1. Manufacturing method for producing a continuous sequence of hollow hodies of thermoplastic resin in a "single-stage" process, comprising the sub-steps in which:
- a flow of molten plastic mass is injected into a plurality of moulds comprising a multiplicity of moulding cavities, so as to obtain a respective multiplicity of substantially cylindrical preforms,
- said preforms are removed from the respective moulds and are then conveyed into single temperature-conditioning station,
- said preforms are allowed to dwell in these temperature-conditioning stations for a predetermined period of time;
- said preforms are then transferred into respective blowing moulds, whereby the preforms are inserted in respective asymmetric cavities of blowing moulds and subjected to a blow-moulding step,
- a stretching rod (11) is inserted in the interior of a respective preform (19) until it comes almost in contact with the bottom (18) of said preform, without however touching it;
- a stretching counter-rod (12), which is arranged in alignment with said stretching rod, is approached to the preform, from the outside thereof, up to a point at which an end portion (13) of said counter-rod is brought in close proximity of the portion of the bottom of the preform that lies on the opposite side with respect to said stretching rod;
- said preform is finally blow-moulded and said stretching rod is at the same time moved forward, so that the latter is caused to press against the bottom zone of the preform which in turn is in this way capable of pushing said end portion (13) of said counter-rod in the direction of ejection from said blowing mould cavity;
- a controlled-pressure gas flow is caused to be issued from said end portion (13) of said counter-rod, said gas flow being basically directed towards the bottom end of the blow-moulded hollow body, so as to promote its separation from the bottom of the mould cavity.

2. Apparatus for blow-moulding a continuous sequence of preforms of thermoplastic resin, comprising at least an asymmetrical blow-moulding cavity (10), in which the body of a respective preform (13) is inserted, appropriate means for blowing compressed gas into the mouth of said preform, a stretching rod (11) adapted to move into said preform through said mouth thereof and to press in a controlled manner, and by a definite stroke, against the bottom of the preform,
- a counter-rod (12) that is provided with an end portion (13) and a longitudinal inner cavity and that there are arranged means adapted to blow in a controlled manner compressed gas into the longitudinal inner cavity, **characterised in that** said end portion is adapted to engage against a portion of the outer surface of the bottom of the preform and to exert a controlled pressure upon said bottom portion, whereby said end portion is provided with a plurality of through-perforations between the outer surface thereof and said longitudinal inner cavity, through which said gas is enabled to be ejected.

## Patentansprüche

1. Herstellungsverfahren zum Erzeugen einer kontinuierlichen Folge von Hohlkörpern aus Thermoplastharz in einem "einstufigen" Prozess, das die folgenden Teilschritte umfasst, in denen:
- ein Strom aus geschmolzener Kunststoffmasse in eine Vielzahl von Formen eingespritzt wird, die eine Vielzahl von Formhohlräumen umfassen, um so eine entsprechende Vielzahl im Wesentlichen zylindrischer Vorformlinge zu gewinnen,
- die Vorformlinge aus den entsprechenden Formen entfernt und dann in eine einzelne Temperaturhandlungsstation befördert werden,
- die Vorformlinge über einen vorgegebenen Zeitraum in diesen Temperaturbehandlungsstationen verbleiben können;
- die Vorformlinge dann in entsprechende Blasformen überführt werden, wobei die Vorformlinge in entsprechende asymmetrische Hohlräume von Blasformen eingeführt und einem Blasformschritt unterzogen werden,
- eine Reckstange (11) in das Innere eines entsprechenden Vorformlings (19) eingeführt wird, bis sie nahezu mit dem Boden (18) des Vorformlings in Kontakt kommt, ohne ihn jedoch zu berühren;
- eine Reck-Gegenstange (12), die mit der Reckstange fluchtend angeordnet ist, an den Vorformling von seiner Außenseite her bis zu einem Punkt angenähert wird, an dem ein Endabschnitt (13) der Gegenstange nahe an den Abschnitt des Bodens des Vorformlings gebracht wird, der auf der in Bezug auf die Reckstange gegenüberliegenden Seite liegt;
- der Vorformling abschließend blasgeformt wird und die Reckstange gleichzeitig nach vorne bewegt wird, so dass letztere an die Bodenzone des Vorformlings drückt, der auf diese Weise seinerseits den Endabschnitt (13) der Gegenstange in der Richtung des Ausstoßens aus dem Blasformhohlraum schieben kann,
- ein gesteuerter Gasstrom aus dem Endabschnitt (13) der Gegenstange abgegeben wird, wobei der Gasstrom im Wesentlichen auf das Bodenende des blasgeformten Hohlkörpers gerichtet ist, um seine Trennung vom Boden des Formhohlraums zu fördern.

2. Vorrichtung zum Blasformen einer kontinuierlichen Folge von Vorformlingen aus Thermoplastharz, die wenigstens einen asymmetrischen Blasformhohlraum (10), in den der Körper eines entsprechenden Vorformlings (13) eingeführt wird, geeignete Einrichtungen zum Blasen von Druckgas in die Öffnung des Vorformlings, eine Reckstange (11), die so eingerichtet ist, dass sie sich durch die Öffnung des Vorformlings in diese hinein bewegt und auf eine gesteuerte Weise und mit einem bestimmten Hub an den Boden des Vorformlings drückt.
eine Gegenstange (12) umfasst, die mit einem Endabschnitt (13) und einem Längs-Innenhohlraum versehen ist, wobei Einrichtungen vorhanden sind, die so eingerichtet sind, dass sie auf gesteuerte Weise Druckgas in den Längs-Innenhohlraum blasen, **dadurch gekennzeichnet, dass** der Endabschnitt so eingerichtet ist, dass er mit einem Abschnitt der Außenfläche des Bodens des Vorformlings in Eingriff kommt und einen gesteuerten Druck auf den Bodenabschnitt ausübt, wobei der Endabschnitt mit einer Vielzahl von Durchgangsöffnungen zwischen seiner Außenfläche und dem Längs-Innenhohlraum versehen ist, durch die das Gas ausgestoßen werden kann.

## Revendications

1. Procédé de fabrication pour produire une séquence continue de corps creux de résine thermoplastique dans un procédé « en une seule étape » comprenant les étapes auxiliaires dans lesquelles :
- un flux de plastique fondu est injecté dans une pluralité de moules comprenant une multitude de cavités de moulage, de manière à obtenir une multitude de préformes cylindriques respectives,
- lesdites préformes sont retirées des moules respectifs et sont ensuite transportées dans un poste de conditionnement en température unique,
- lesdites préformes sont autorisées à résider dans ces postes de conditionnement en température pendant une durée prédéterminée ;
- lesdites préformes sont ensuite transférées dans des moules d'extrusion-soufflage respectifs, moyennant quoi les préformes sont insérées dans des cavités asymétriques respectives de moules d'extrusion-soufflage et soumises à une étape de moulage par extrusion-soufflage,
- une tige de tension (11) est insérée à l'intérieur d'une préforme respective (19) jusqu'à ce qu'elle vienne presque en contact avec le fond (18) de ladite préforme, sans cependant la toucher ;
- une tige antagoniste de tension (12), qui est agencée en alignement avec ladite tige de tension, est approchée de la préforme, depuis l'extérieur de celle-ci, jusqu'à un point auquel une partie d'extrémité (13) de ladite tige antagoniste est amenée à proximité étroite de la partie du fond de la préforme qui se trouve sur le côté opposé par rapport à ladite tige de tension ;
- ladite préforme est finalement moulée par extrusion-soufflage et ladite tige de tension est en même temps déplacée vers l'avant, de sorte que cette dernière soit amenée à presser contre la zone de fond de la préforme qui à son tour est de cette manière capable de pousser ladite partie d'extrémité (13) de ladite tige antagoniste dans le sens d'éjection depuis ladite cavité de moule d'extrusion-soufflage,
- un flux de gaz commandé en pression est amené à être émis depuis ladite partie d'extrémité (13) de ladite tige antagoniste, ledit flux de gaz étant principalement dirigé vers l'extrémité inférieure du corps creux moulé par extrusion-soufflage, de manière à favoriser sa séparation du fond de la cavité de moule.

2. Dispositif pour mouler par extrusion-soufflage une séquence continue de préformes de résine thermoplastique, comprenant au moins une cavité de moulage par extrusion-soufflage asymétrique (10), dans lequel le corps d'une préforme respective (13) est inséré, des moyens appropriés pour souffler le gaz comprimé dans la gueule de ladite préforme, une tige de tension (11) adaptée pour se déplacer dans ladite préforme à travers ladite gueule de celle-ci et pour presser d'une manière commandée, et par une course définie, contre le fond de la préforme,
- une tige antagoniste (12) qui est pourvue d'une partie d'extrémité (13) et d'une cavité intérieure longitudinale et sont agencés des moyens adaptés pour souffler d'une manière commandée un gaz comprimé dans la cavité intérieure longitudinale, **caractérisé en ce que** ladite partie d'extrémité est adaptée pour se mettre en prise contre une partie de la surface extérieure du fond de la préforme et d'exercer une pression commandée sur ladite partie de fond, moyennant quoi ladite partie d'extrémité est pourvue d'une pluralité de perforations de passage entre la surface extérieure de celle-ci et ladite cavité intérieure longitudinale, à travers laquelle ledit gaz est amené à être éjecté.
